# EUROPEAN PATENT APPLICATION

(11) **EP 4 650 248 A1**
(43) Date of publication of application: **19.11.2025**
(21) Application number: 23915859.5
(22) Date of filing: 28.12.2023
(51) Int. Cl.: B61L 29/02, B61L 29/10, E06B 9/02

(54) **SAFETY BARRIER FOR LOADING BAYS**

(30) Priority: 11.01.2023 ES 202330015
(71) Applicant: PORTES BISBAL, S.L., 17116 Cruïlles (ES)
(72) Inventor: MIR PONS, Angel, 17116 CRUÏLLES (GIRONA) (ES)
(74) Representative: Cabinet Beau de Loménie
(86) International application number: PCT/ES2023/070793
(87) International publication number: WO 2024/149918

(57) **Abstract**

The present invention relates to a safety barrier (100) for loading bays that comprises two support posts, a left post (110) and a right post (120), that support a transverse closure (130, 131). The safety barrier has a closing/opening system of the type used in sectional doors. Each support post (110, 120) comprises a guide (180, 190) that enables the transverse closure (130, 131) to vertically move from a lower closed position to an upper open position via the actuation of the closing/opening system of the barrier (100).

## Description

### Technical field

The present invention relates to the technical field of safety barriers for loading bays. More specifically, it relates to a safety barrier for loading bays of the type comprising two support posts that support a transverse closure, and with a built-in closing/opening system.

### State of the art

Loading bays are terminals for the collection and unloading of goods for different road vehicles in the transport and logistics sector. In warehouses or distribution centres with a high volume of traffic, it is common to find a series of entrances that transporters arrive at, normally with large, and therefore high, vehicles, to drop off or collect their goods. For a quick and comfortable load transfer process, the floor on which the load is to be deposited (or from which it is to be collected) should ideally be at a height similar to that of the trailer of the vehicle, usually a lorry, in order to facilitate the transit of operators and the various items of machinery used in the sector, such as forklifts. That is why said loading bays are elevated above the floor of the site or facility.

This peculiarity entails obvious safety risks related to falls of personnel and warehouse vehicles working in the facilities and having to approach the slope located at the entrance of the loading bay: trolleys, forklifts, stackers, pallet trucks, etc. One of the most widespread generic solutions in this particular environment is that of fixed or portable safety barriers, which are placed at the access between the lorry and the bay itself. In this regard, there are different types of barriers, including folding barriers and manually removable barriers. The operation of folding barriers, to put it simply, would be similar to that of a railway crossing barrier or a garage entrance. Manually removable barriers have the clear disadvantage of requiring the presence and time of one or more operators to place and remove them, which sometimes takes up valuable time, especially in this particular sector.

Some of the disadvantages of existing safety barriers, apart from the disadvantage mentioned for manual barriers, are the relatively low resistance to strikes from vehicles of a certain weight, such as forklifts, the need for an installation space (especially on the sides of the bay access point) that is too large, and not always available, and, in the case of stronger barriers, the requirement to use a greater quantity or volume of materials, as well as heavier materials, with the consequent disadvantage in terms of manufacturing costs and electrical power for the electromechanical drive of this greater weight. In the case of safety barriers of a certain size and intended to offer greater resistance to possible collisions, another disadvantage worth mentioning is the relative complexity of installation and the use of a large amount of material and individual components, precisely because greater opposition or inertia to the possible thrust caused by the warehouse vehicle is sought.

Considering the foregoing observations, the present invention provides a safety barrier for loading bays which, due to the configuration of its components, at least partially overcomes the aforementioned drawbacks. Given its features of connection between the elements that make up the transverse closure, it offers advantages of mechanical strength suitable for situations of this type and, at the same time, it is easy to install and dismantle. Furthermore, due to the physical nature (weight, dimensions, etc.) of its individual components, prior to being assembled together to form an assembly, it does not require a large number of operators for installation and the installation is relatively simple, as will be deduced from the embodiments that will be described in the following sections. It also does not require ample space in the loading bay in either the horizontal plane or the vertical plane (ceiling height).

### Object of the invention

For this purpose, the object of the present invention is a safety barrier for loading bays that consists of two elements in the form of support posts, and between them, a transverse closure. Said transverse closure can be vertically moved from a lower closed position to an upper open position via the actuation of a closing/opening system of the barrier.

This makes it possible to have a barrier with its transverse closure coupled to the support posts that offers great resistance to a blow against the barrier, with easy automatic opening or closing and without occupying lateral space that may not be feasible to use in loading bays due to the existence of adjacent doors.

This safety barrier comprises at least one pair of left and right supports for vertical movement, to which the transverse closure is attached, and said supports for vertical movement comprising sliding elements on the guide. Preferably, said sliding elements are rollers that facilitate the fitting and rolling along the guide of the supports and consequently of the transverse closure. In this way, the combination of rollers and supports for vertical movement that are hinged together will allow balanced movement (without stiffness) of the entire assembly along the guides.

For greater impact resistance, the guide is C-shaped and comprises a front groove dimensioned so that the sliding element, preferably the corresponding roller, can pass through it in order to settle in the guide. This groove may be covered by an additional cover. This also makes it easier to mount and replace the closure if necessary.

Preferably, the transverse closure consists of at least one transverse tube that can be attached to the supports for vertical movement, which consist of a cohesive transverse closure assembly that provides the necessary resistance to possible collisions with forklifts or similar. This configuration gives the system a certain modularity as different combinations of tubes and supports can be made and they can be transported loose for on-site assembly. In addition, said supports for vertical movement comprise holes for fitting the corresponding transverse closure tubes. These holes allow the tubes to match the width of the guides and prevent them from being pulled out by a blow, providing more loading surface and consequently greater impact resistance.

This transverse closure could consist of a single tube or several tubes and the dimensions (more specifically, the diameter) of these tubes can be selected depending on the conditions of each case.

Preferably, the transverse closure comprises at least two tubes with a larger diameter and at least one tube with a smaller diameter. The tubes with a larger diameter provide greater resistance to bending to ensure that forklifts do not fall, and tubes with a smaller diameter close gaps and prevent the passage of people. Any number of tubes can be attached to each pair of supports for vertical movement, at the manufacturer's or customer's discretion, depending on their requirements. The cylindrical configuration of these tubes is not limiting and they can be rectangular plates or plates with any other geometric configuration as long as they meet a minimum impact resistance.

According to another feature of the invention, each support post comprises a respective projecting top crossbar, substantially perpendicular to the corresponding post and projecting frontally, cantilevered at the top of the post and in the direction of the interior of the loading bay.

These projecting top crossbars serve to support the extensions of the corresponding guides that run along each support post. In this way, when the corresponding electromechanical system raises the different tubes of the barrier along the roller guides, these tubes will move towards the interior of the loading bay, parallel to the ceiling of said loading bay, which is very useful when the height of the bay is low.

In order to facilitate the task of folding the closure parallel to the ceiling on the projecting top crossbars, the barrier is intended to comprise at least another pair of supports for vertical movement with a corresponding transverse closure, said pair of supports for vertical movement being able to be hingedly attached to the other pair of supports for vertical movement. **In** this way, the hinge facilitates folding when several transverse closures are required to be joined together at the top and bottom to form the barrier. This configuration allows a modularity of the closure based on the requirements of each case.

In another aspect of the invention, the safety barrier also comprises one or more reinforcement struts that connect several of the tubes transversely to each other. In this way, the resistance of the assembly is reinforced and, at the same time, passage gaps through the barrier can be covered. Depending on the material of the tubes and the conditions of the specific application, these struts will be necessary in greater or lesser numbers. In addition, these struts will hingedly join two adjacent transverse closures. This allows for increased resistance and they can be folded as mentioned for low ceilings.

Furthermore, the safety barrier preferably comprises a horizontal top crossbar that firmly joins the two support posts to each other at the top. This provides more resistance and allows the cross-section of the posts to be reduced.

According to another aspect of the invention, in order to make the safety barrier more reliable against impacts from heavy warehouse vehicles, locking hooks are included. Preferably, these locking hooks are substantially J-shaped, with one long end and one short end. The function of these hooks is to prevent one or more tubes from significantly deforming due to a violent collision of a vehicle against them by pulling the supports for vertical movement out of position, i.e., by pushing them in the front direction (towards the interior of the loading bay), as this could lead to a total or partial disassembly of the system and thus lead to the vehicle falling from a height of the loading bay. For this purpose, the long end or side of the locking hook will be in firm contact with the corresponding vertical movement support and the short end or side will be in contact with a lateral recess made in the support post.

Preferably, said hooks may be installed on a structure that is then mounted on the supports for vertical movement. This configuration allows the hooks to be installed more easily after the transverse closures have been positioned.

Another aspect of the invention relates to side guards for each of the support posts. These side guards surround or enclose each support post longitudinally, remaining open only on the face corresponding to the tubes of the transverse closure, so that said tubes can travel vertically along the roller guides of the support posts. Said guards are firmly attached to the support posts.

Based on the aforementioned novel and inventive features of the present invention, persons skilled in the art will understand the solution provided at least partially by the safety barrier of this document to some of the drawbacks of the existing safety barriers in relation to their reliability, their complexity of mounting, the space they take up in the bay, etc.

### Description of the figures

The attached drawings illustrate, by way of non-limiting example, embodiments of the safety barrier for loading bays as per the invention. In said drawings:
Figure 1 is a perspective front view of the safety barrier of the invention.
Figure 2a is a detail of the coupling between rollers of the supports for vertical movement and the guides of the support posts.
Figure 2b is a detail similar to figure 2a, but with a closing cover in place.
Figure 3 is a detail of the attachment of the locking hooks to the supports for vertical movement by means of an attachment structure comprising the hooks.
Figure 4 is a detail similar to figure 3, but from the opposite side of the support post so that the recess in which the hooks couple can be seen.
Figure 5 is a perspective view of an embodiment of the safety barrier of the invention with the side guards.
Figure 6 is a view of an embodiment of the safety barrier of the invention with projecting top crossbars.

### Detailed description of the invention

Embodiments of the invention illustrated in the figures listed above will be described in detail below.

In order to facilitate understanding of the present disclosure as well as the interpretation of the attached claims, it is important to note that when technical elements or features are referred to in this document with the term "left" or "right", this term defines the position of the mentioned element when the safety barrier (100) is viewed from the interior of the loading bay. Likewise, adjectives such as "front"/"rear" or terms such as "frontally" also refer to said viewing position, with the "front" face of the barrier (100) being closest to the observer. Similarly, "top"/"bottom" refers to the spatial positions of the elements when the barrier (100) is mounted in its operating configuration. Therefore, these adjectives have the sole purpose of spatially locating the elements within their environment and do not impose any technical limitations.

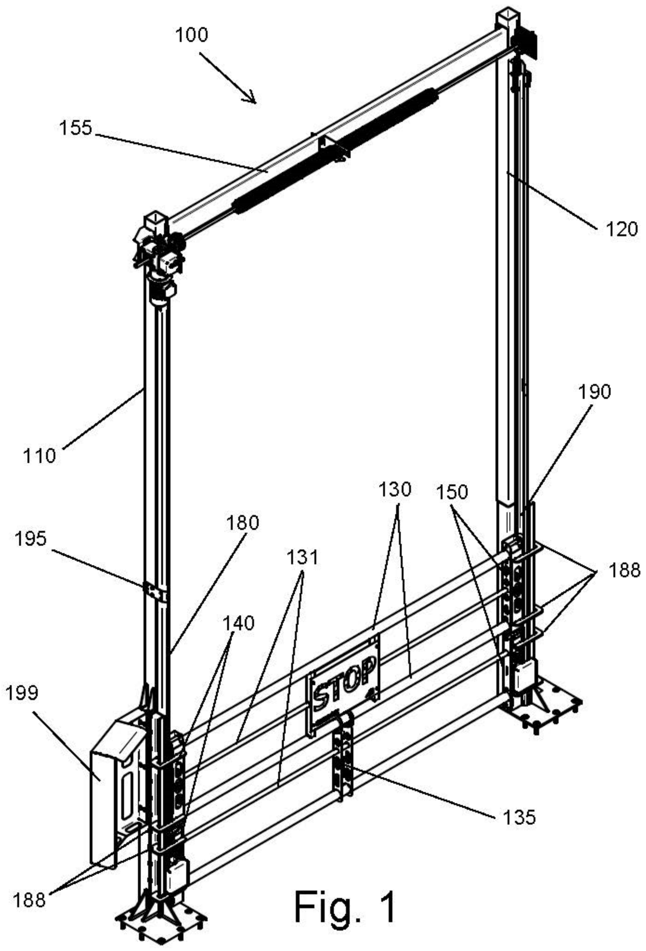

Figure 1 shows a perspective view of the safety barrier (100) with the transverse closure (130, 131) separated from the support posts (110, 120). These support posts are two pillars suitable for supporting the weight of the central structure (the transverse closure (130, 131)) and withstanding the mechanical stresses that may occur when said structure is raised and lowered along them. They are firmly attached to the floor of the loading bay, for example, by means of a wide base for greater stability. Said posts (110, 120) further comprise guides (180, 190) on which corresponding rollers (160) are mounted, which are attached to the transverse closure (130, 131), specifically on supports (140, 150) for vertical movement of said transverse closure (130, 131). The guides (180, 190) contain and guide the supports (140, 150) for vertical movement and consequently the transverse closure (130, 131) in an upward/downward direction due to an electromechanical system that may be similar to the one used for the sectional doors of garages, warehouses, etcetera.

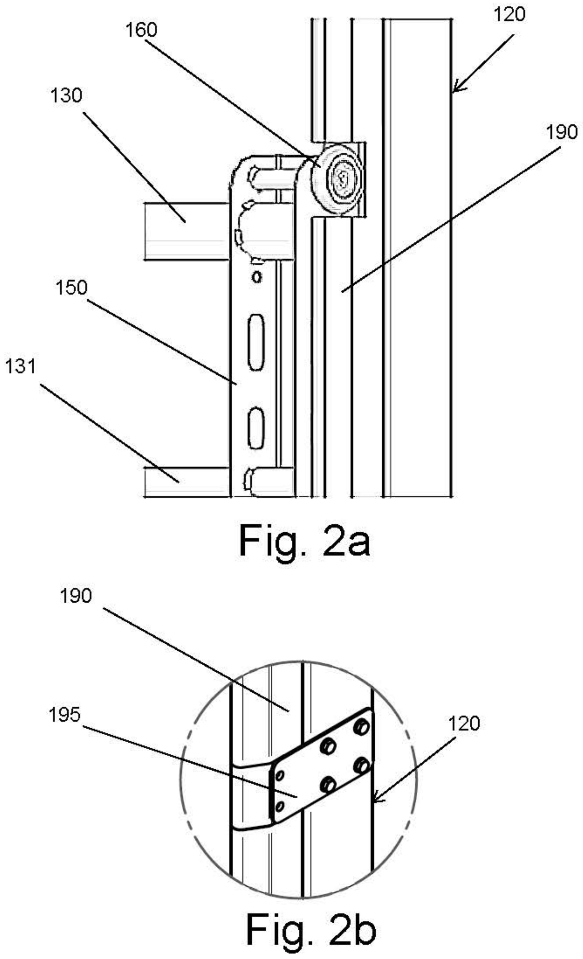

To mount the transverse closure (130, 131) on the guides (180, 190), said guides are provided with a front groove (185) through which the roller (160) can pass in order to be housed in the corresponding guide (180, 190). This can be better seen in figure 2a. Figure 2a shows a detail of the right guide (190) corresponding to the right post (120) in the area where the right front groove (185) is located for the passage of a right roller (160) (for the left post (110), the configuration is the same but with the appropriate symmetry). Furthermore, the system also has a cover (195) (figure 2b) to protect the mechanism and prevent any of the rollers (160) from coming out of the front groove (185) as they travel up/down the guides (180, 190).

It can also be seen that said rollers (160) are attached to supports (140, 150) for vertical movement (figure 2a only shows the right support (150) for vertical closing movement), supports (140, 150) which consist of the cohesive elements of the tubes (130, 131) as better shown in figure 1. In other words, these supports (140, 150) for vertical movement, together with the tubes (130, 131) that are attached, at their left and right ends, to the corresponding support (140, 150), preferably in fitting holes (141) with a dimension corresponding to the cross-section of the tube (130, 131), consist of the transverse closure which can be considered as a panel of a sectional door, with the advantage that the amount of material used for the panel is reduced, it is possible to see through said panel and there is a modularity which will be explained in the following paragraphs. Likewise, the fact that this "panel" is made up of essential elements that are readily available in the industry (such as the tubes (130, 131) and the profiles that can be used for the supports (140, 150) and the reinforcement struts (135), which will be explained later) facilitates its construction and also its assembly on site.

Another important feature of this barrier (100) is that the transverse closure (130, 131) can be configured with a desired number (depending on the requirements) of tubes (130) and supports (140, 150) for vertical movement. Each pair of supports (140, 150) for vertical movement will hold the number of tubes (130, 131) provided by the user for the intended application in their installations. For example, in the preferred embodiment of this aspect of the invention, as can be seen in figure 1, the transverse closure (130, 131) is made up of two pairs of supports (140, 150) for vertical movement wherein the upper pair of supports (140, 150) includes two tubes (130) with a given diameter and another tube (131) with a smaller diameter; in contrast, the lower pair of supports (140, 150) includes one tube (130) with a given diameter (for example, equal to that of the two tubes (130) with a large diameter of the upper pair) and only one tube (131) with a smaller diameter. Here it can be seen how tubes (130) with a larger diameter have been selected with the aim of resisting impacts from forklifts and other vehicles, but also tubes with a smaller diameter have been selected to simply cover more space and prevent operators, tools or goods from falling. Furthermore, the supports (140, 150) for vertical movement are hinged to each other in order to allow better movement along the guides (180, 190) and to facilitate mounting through the aforementioned front grooves (185).

According to another embodiment of the invention, the transverse closure (130, 131) includes one or more reinforcement struts (135) connecting two or more of the tubes (130) together, as can also be seen in figure 1. The use of these struts (135) is advisable and in most cases necessary as an additional reinforcement and safety measure, which is essential in the work environment; however, in situations where lower requirements are foreseen, especially in terms of the mechanical strength of the assembly, they could be dispensed with. Furthermore, said struts (135) help prevent tools or people from falling through the gaps between the tubes (130). Therefore, the safety barrier (100), despite being designed and intended for use on loading bays, could also be used in any other area where the passage of persons or vehicles is to be restricted. Additionally, said struts (135) will be attached to the tube(s) (130) of the lower pair of supports for vertical movement (140, 150) and hingedly secured to the tube(s) (130) of the upper pair of supports for vertical movement (140, 150).

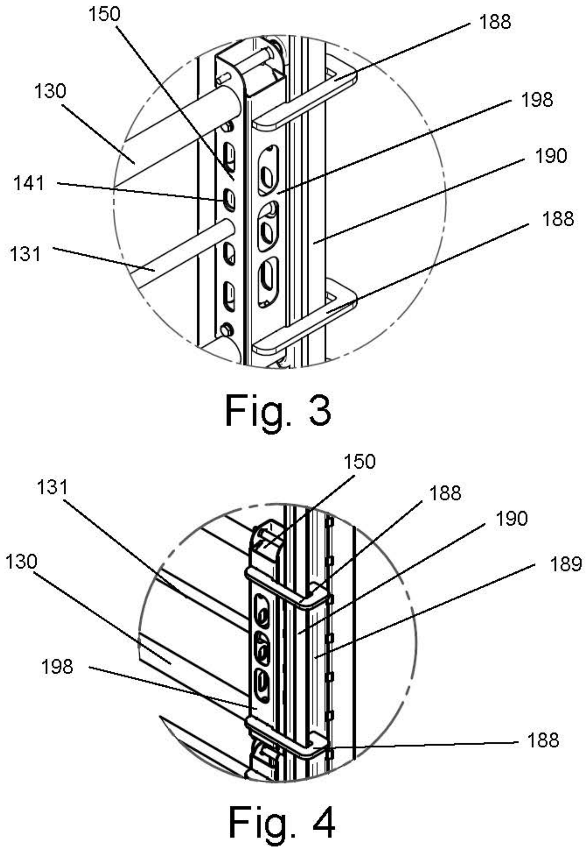

In another embodiment of the invention, the safety barrier (100) comprises locking hooks (188) to prevent the supports (140, 150) for vertical movement from coming out of the roller guides (180, 190) upon impact with the tubes (130, 131) and deforming outwards with respect to the loading bay. In such a situation (in other words, a strong impact from a forklift, for example), the tubes (130, 131) could become deformed in their central part, their ends folding and being pushed towards the loading bay. In some cases, they could become completely disassembled with the consequent risk of falling out of the loading bay. To prevent this, the aforementioned locking hooks (188), which can be better seen in figures 3 and 4, limit the movement of the supports (140, 150) in the front direction. These hooks (188) have a shorter side that is inserted in a lateral recess (189) of the support posts (110, 120); the other longer side is attached to the support (140, 150) for vertical movement. **In** case of plastic deformation of the assembly due to excessive mechanical stresses, the different components would be locked together, due to torsion and other types of deformation, preventing the release of the supports (140, 150) for vertical movement and the tubes (130, 131).

Said figures 3 and 4 also show that this locking system based on hooks (188) may comprise a front locking structure (198) for each of the supports (140, 150). This front locking structure (198) comprises attached hooks (188) for coupling to the supports (140, 150) for ease of mounting.

In a variant of one of the preferred embodiments of the invention, the lateral recess (189) to which the short end of the locking hook (188) is coupled may be, for example, a longitudinal flange made or attached (for example, a metal profile) to the outer face of each of the support posts (110, 120). In fact, any element that allows a firm hold of the hook (188) against the posts (110, 120) and the supports (140, 150) for vertical movement is valid as an auxiliary component of the locking system described herein. Persons skilled in the art will note that these construction and/or structural details do not alter the essence of the subject matter set out in the claims.

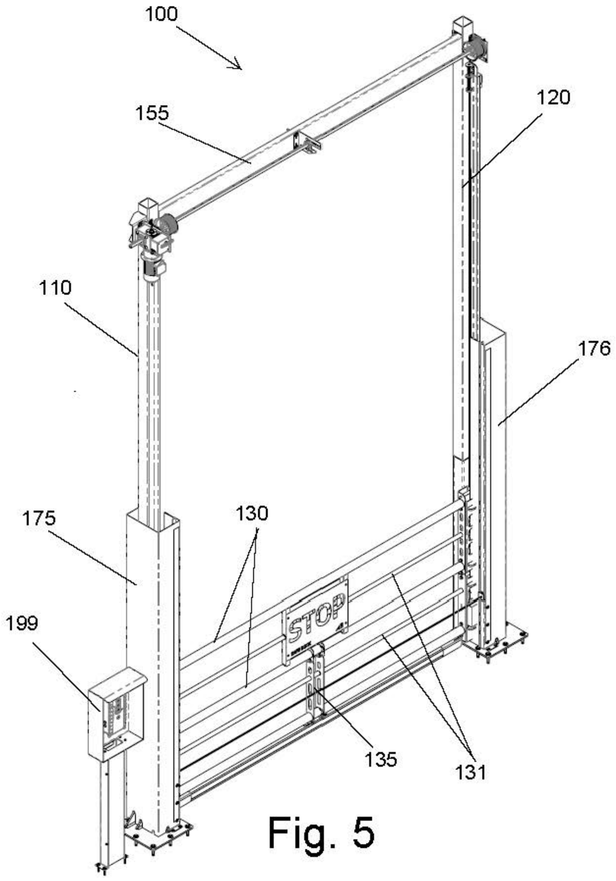

Figure 5 shows another structural element that is included in the barrier (100): the horizontal top crossbar (155). In addition to its function as a connector for the support posts (110, 120), it also serves to support part of the electromechanical opening/closing system of the transverse closure (130, 131).

Also illustrated in this figure are the side guards (175, 176) which create a safety enclosure for each of the support posts (110, 120). These side guards (175, 176) have a longitudinal opening along the entire length of their longest dimension to allow the passage of the transverse closure (130, 131) as it travels upward/downward. In the illustrated example, the side guards (175, 176) have a substantially rectangular cross-section, but said cross-section could take another shape as long as it creates a safety space with the aforementioned opening. Furthermore, also in the illustrated example, the side guards (175, 176) are attached to the base of each respective support post (110, 120), but they could be attached to other areas or parts of the post (110, 120) or of elements incorporated into or connected to the post (110, 120).

This figure 5 also shows other elements that, despite not being claimed as technical features in the claims, are envisaged to be used in some embodiments of the barrier (100) of the invention, taking into account the conditions of the intended environment. For example, considering the intended work environment of said barrier (100), a "parachute" or safety brake system is envisaged for a situation where the cables of the electromechanical drive system break. The installation of control cells mounted on the barrier (100) itself or on auxiliary elements for automated opening/closing is also envisaged. In this regard and in relation to other electrical elements that may form part of the system (including the electromechanical drive), the inclusion of a box for a control panel (199) is envisaged, as can be seen in the lower left part of figure 5. This box (199) may also be incorporated into the very structure of the barrier (100) or may be installed separately, adjacent to said barrier. Other elements to consider, although not purely technical, would be the signalling of the transverse closure (130, 131) with warning markings or signs such as a "STOP" and with the use of colours representative of said situation, for example red and yellow.

As can be deduced from the foregoing, one of the important advantages of the safety barrier (100) of the invention is that it is self-supporting, in the sense that it does not need any external elements (which can be found or must be previously installed at the corresponding access of the loading bay). A small space on each left and right side of the entrance of the bay is simply required for the attachment of the support posts (110, 120).

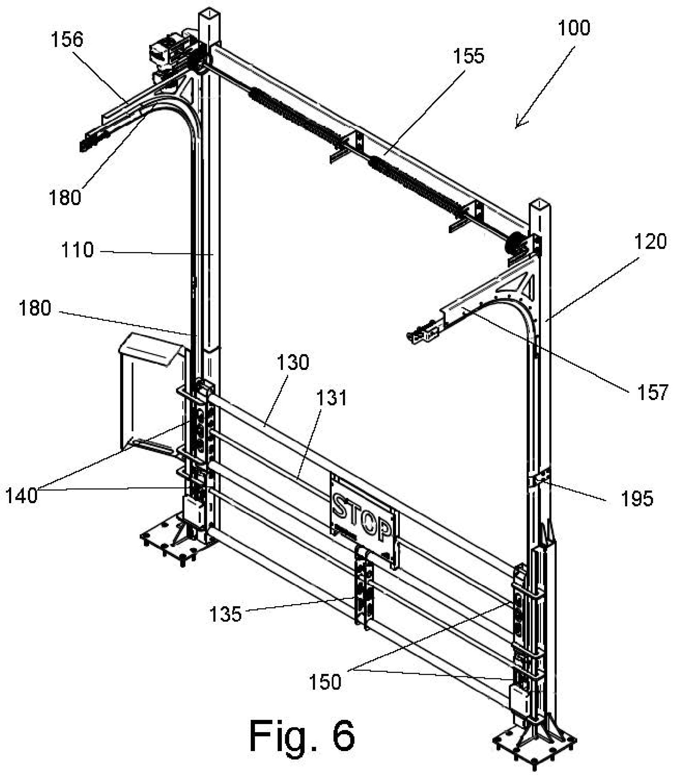

Lastly, figure 6 shows another embodiment of the invention in which projecting top crossbars (156, 157) are attached to the respective support posts (110, 120). These projecting crossbars (156, 157) project towards the interior of the bay from the top of the posts (110, 120) and their main function is to act as a support for the guides (180, 190) (which, in their vertical section of travel, have already been described as being attached to the posts (110, 120)), in an additional horizontal extension that serves to collect the transverse closure (130, 131) or part thereof in said orientation. In this way, the installation of the safety barrier (100) is facilitated in environments where the height does not allow the installation of figure 6, which has been described in detail in relation to the previous figures.

## Claims

1. A safety barrier (100) for loading bays that comprises two support posts, a left post (110) and a right post (120), that support a transverse closure (130, 131), and the safety barrier having a closing/opening system of the type used in sectional doors, **characterised in that** each support post (110, 120) comprises a guide (180, 190) that enables the transverse closure (130, 131) to vertically move from a lower closed position to an upper open position via the actuation of the closing/opening system of the barrier.

2. The safety barrier (100) according to claim 1, comprising at least one pair of left (140) and right (150) supports for vertical movement to which the transverse closure (130, 131) is attached, said supports for vertical movement (140, 150) comprising sliding elements on the guide (180, 190).

3. The safety barrier (100) according to the preceding claim, wherein the guide (180, 190) is C-shaped and comprises a front groove (185) that allows the sliding elements to pass through it in order to install the supports for vertical movement (140, 150) in said guide (180, 190).

4. The safety barrier (100) according to claim 2 or 3, wherein the transverse closure is at least one transverse tube (130) that can be attached to the supports for vertical movement (140, 150), said supports for vertical movement (140, 150) comprising fitting holes (141) for attaching the corresponding tubes (130).

5. The safety barrier (100) according to the preceding claim, wherein the transverse closure comprises at least two tubes (130) with a larger diameter and at least one tube (131) with a smaller diameter.

6. The safety barrier (100) according to claims 2 to 5, wherein each support post (110, 120) comprises a respective projecting top crossbar (156, 157), substantially perpendicular to the corresponding post (110, 120) and projecting frontally at the top of said post, so that each guide (180, 190) is extended by the projecting top crossbar (156, 157).

7. The safety barrier (100) according to the preceding claim, comprising at least another pair of supports for vertical movement (140, 150) with a corresponding transverse closure (130), which can be hingedly attached to the other pair of supports for vertical movement (140, 150).

8. The safety barrier (100) according to any one of claims 4 to 7, comprising at least one reinforcement strut (135) transversely connected to two or more of the tubes (130).

9. The safety barrier (100) according to any one of the preceding claims, comprising a horizontal top crossbar (155) that firmly joins the two support posts (110, 120) to each other at the top.

10. The safety barrier (100) according to any of the preceding claims, comprising at least one locking hook (188) attached to the support for vertical movement (140, 150), the end of which fits into a longitudinal recess (189) provided on the outer face of each of the support posts (110, 120),

11. The safety barrier (100) according to any of the preceding claims, comprising side guards (175, 176) that can be attached to the support posts (110, 120), each of said side guards (175, 176) having a longitudinal box shape that encloses each support post (110, 120).
